# EUROPÄISCHE PATENTSCHRIFT

(11) **EP 0 715 362 B1**
(45) Veröffentlichungstag und Bekanntmachung des Hinweises auf die Patenterteilung: **06.05.1999**
(21) Anmeldenummer: 95117238.6
(22) Anmeldetag: 02.11.1995
(51) Int. Cl.: H01M 2/10, B60R 16/04, H01R 11/28

(54) **Akkumulatorenbatterie**
Accumulator
Accumulateur

(30) Priorität: 02.12.1994 DE 9419279 U
(43) Veröffentlichungstag der Anmeldung: 05.06.1996
(73) Patentinhaber: VB Autobatterie GmbH, D-30419 Hannover (DE)
(72) Erfinder: Gummelt, Klaus, D-31552 Rodenberg (DE); Eisenacher, Werner, D-31171 Nordstemmen (DE); Christophersen, Willi, D-31555 Suthfeld (DE); Haase, Hans-Jürgen, D-30826 Garbsen (DE); Böhle, Christian, Dr., D-30823 Garbsen (DE)
(74) Vertreter: Kaiser, Dieter Ralf, Dipl.-Ing.

(56) Entgegenhaltungen:
- DE-U- 9 419 279
- GB-A- 2 146 834
- US-A- 2 551 990
- US-A- 5 132 194
- PATENT ABSTRACTS OF JAPAN vol. 006 no. 107 (E-113) ,17.Juni 1982 & JP-A-57 038566 (YUASA BATTERY CO LTD) 3.März 1982,
- PATENT ABSTRACTS OF JAPAN vol. 008 no. 025 (E-225) ,2.Februar 1984 & JP-A-58 186157 (NISSAN JIDOSHA KK) 31.Oktober 1983,

## Beschreibung

Die Erfindung betrifft eine Akkumulatorenbatterie, insbesondere Starterbatterie für Kraftfahrzeuge, mit einem Batteriegehäuse, durch das hindurch die Pole der Batterie nach außen geführt sind.

Übliche Starterbatterien für den klassischen Einsatz zum Starten von Verbrennungskraftmaschinen und zur Beleuchtung und Zündung enthalten in einem mehrzelligen - meist 6zelligen - Blockkastengehäuse aus schlagfestem Polypropylen etwa 1,4 bis 1,6 mm dicke positive und negative Gitterplatten mit zwischenliegenden Separatoren. Letztere bestehen überwiegend aus gesintertem Polyvinylchlorid oder aus Kunststoff- oder Glasfasern als Basismaterial. Durch den Blockdeckel sind konische Endpole abgedichtet hindurchgeführt, die geschützt in Mulden liegen.

Zur Herstellung des Deckels wird im allgemeinen das gleiche Material, aus dem auch der Blockkasten besteht, eingesetzt. Die Verbindung von Kasten und Deckel erfolgt durch Spiegelschweißen. Dabei werden beide Teile an den Berührungsflächen über den Erweichungspunkt des Materials hinaus erhitzt und dann unter Druck aufeinandergepreßt.

Die Unterbringung der Akkumulatorenbatterie im Kraftfahrzeug macht eine feste Verbindung derselben mit einer Unterlage im Motorraum oder mit dem Chassis notwendig. Bekannt sind verschiedene Möglichkeiten der Befestigung. So beschreibt das deutsche Gebrauchsmuster G 73 38 652 eine Spannrahmenbefestigung, dergestalt, daß ein viereckiger, über den Batterieumriß hinausstehender Rahmen dem Blockdeckel aufgelegt und an den Stirnseiten des Blockkastens mittels Bolzenschrauben gegen eine feste Batterieunterlage verspannt ist. Die Spannkräfte, die eine leichte Aufwölbung des Spannrahmens über dem Blockdeckel verursachen, werden dabei von Querstegen, welche der Deckeloberfläche angeformt und in ihrer Höhe dem Wölbungsabstand des Rahmens angepaßt sind, aufgefangen.

Eine Jochverspannung gemäß DE-PS 28 09 896, die für die gleichzeitige Halterung von zwei Akkumulatoren besonders geeignet ist, sieht deren Plazierung in einem Tragrahmen vor, wobei sich in einer Distanzhülse zwischen ihnen in der Vertikalen ein Zuganker erstreckt. Dieser bildet einen Anschlag für ein auf die Akkumulatorendeckel einwirkendes Spannelement, beispielsweise eine Blattfeder.

Für den Einsatz im Pkw und in kleinen Nutzkraftfahrzeugen sind die Blockkästen mit Bodenleisten versehen und durch Verklammerung derselben mit einem korrespondierenden festen Rahmen einfach zu befestigen. Der GB-A 1 379 086 ist ein Beispiel für eine solche Bodenleistenhalterung zu entnehmen.

Aus der US-A 5 132 194 ist eine Batteriehalterung bekannt, bei der ein die beiden Batterie-Endpole übergreifender Spannbügel, dessen eines Ende an einer neben der einen Batterie-Stirnseite aufragenden Stange drehbar befestigt ist, mittels einer am anderen Ende über einen Spannriegel angreifenden zweiten Stange hebelartig in gerillte und isolierende Polabdeckungen eingedrückt wird, so daß die Batterie auf einer Bodenplatte, an der beide Stangen verankert sind, fest aufsitzt.

Der US-A 2 551 990 ist eine Halterung für eine Batterie zu entnehmen, bei der an jedem Batteriepol eine Schiene mit Öse befestigt ist, in die ein Stehbolzen eingreift.

Die JP A 57 038 566 beschreibt eine Haltevorrichtung für eine Batterie, die die Form einer Schiene besitzt, welche einerseits an einem Batteriepol, andererseits unter Zwischenlage einer Isolierung an einem Bodenteil befestigt ist.

Keine der bekannten Batteriebefestigungen erweist sich indessen allen denkbaren Beanspruchungen im Verkehr, insbesondere auch kritischen Unfallsituationen, in vollem Umfang gewachsen. Sofem die Verspannung mit Druck auf das Batteriegehäuse wirkt - wenn beispielsweise der Spannbügel über die Endpole Druck auf das Gehäuse ausübt - läßt sich ein definierter Anpreßdruck auf die Dauer nicht aufrechterhalten, da der Gehäusekunststoff plastisch ausweicht. Aus diesem Grunde sind bestimmte Verspannvorrichtungen auf Gehäusegamituren aus Polypropylen gar nicht anwendbar.

Der Erfindung liegt die Aufgabe zugrunde, eine Akkumulatorenkonstruktion anzugeben, die eine besonders zuverlässige und dauerhafte Befestigung am Chassis des Fahrzeuges ermöglicht. Daneben sollte ein Montageroboter zu der Befestigungsanordnung einen leichten Zugriff haben.

Die Aufgabe wird erfindungsgemäß mit einer Akkumulatorenbatterie gelöst, wie sie durch den Anspruch 1 definiert ist.

Die erfindungsgemäße Befestigung besteht danach im Kern aus einer Schiene - sie besitzt etwa die Form eines liegenden flachen S -, die mit dem einen Ende am negativen Endpol der Batterie fest verbunden ist und deren freies Ende eine Befestigungsöse aufweist, die über den Batterieumriß hinaussteht. Die Befestigungsöse befindet sich dabei etwa in Höhe der Seitenwand-Mitte des Blockkastens. Mit ihrer Hilfe kann über die Schiene durch einfache Verschraubung oder auch mittels eines durch die Öse geführten Stahlbolzens eine feste Verbindung zwischen der Batterie und dem Fahrzeugchassis hergestellt werden.

Die Anbindung der Schiene an den negativen Endpol erfolgt zweckmäßig durch Schweißen. Aufgrund der starren Schweißverbindung Pol / Schiene ist die neue Batteriebefestigung zugleich tragfähig. Die erfindungsgemäße Schiene und eine an einem Fixpunkt am Chassis angebrachte Befestigungsöse bilden ein kombiniertes Anschlußteil. Die Schiene kann auf dem Batteriedeckel durch Verankerungen, beispielsweise durch Zapfen an der Schienenunterseite, die in Sacklöcher der Deckelwand eingreifen, oder mittels schwalbenschwanzförmiger Stege und mit diesen korrespondierenden Nuten zusätzlich abgesichert werden.

Durch das kombinierte Anschlußteil gemäß der Erfindung ergibt sich eine feste, durchgehende Verbindung nicht nur zwischen Fahrzeug und Batterie-Endpol, sondem auch bis zu dem vom Polbolzen gehaltenen Plattenblock. Mit der neuen Befestigung der Batterie wird gleichzeitig die Massekontaktierung im Fahrzeug hergestellt. Die Schiene ist daher elektrisch leitend und kann vollständig aus Metall, z.B. aus verbleitem Messing bestehen.

Eine besonders günstige Ausführungsform der Erfindung sieht eine verlängerte Schiene vor, die mit beiden Batterie-Endpolen fest verbunden ist. In diesem Falle muß allerdings der positive Endpol von dem zwischen negativem Endpol und gemeinsamer Befestigungsöse verlaufenden Leitungsstrang elektrisch abgekoppelt sein. Dieser Forderung kommt vorteilhaft eine Schiene aus einem thermoplastischen Kunststoff mit integrierten leiffähigen Teilen entgegen. Als Leiterbahn zwischen dem negativen Pol und der Öse eignet sich beispielsweise ein kunststoffumspritztes Flachbandkabel aus Kupfer.

Die erfindungsgemäße Batterie und vorteilhafte Ausgestaltungen derselben wird im folgenden anhand der Figuren erläutert.

Figur 1 zeigt eine Akkumulatorenbatterie gemäß der Erfindung in einer Draufsicht.

Figur 2 zeigt eine Längsseite der Akkumulatorenbatterie.

Figur 3 zeigt die Akkumulatorenbatterie von einer Stirnseite.

Figur 4 zeigt eine alternative Anordnung der Mehrfachanschlüsse um den positiven Endpol nach Figur 1.

Figur 5 zeigt als Alternative zu Figur 1 eine Akkumulatorenbatterie mit einer beide Batterie-Endpole verbindenden Befestigungsschiene in einer Draufsicht.

Figur 6 zeigt die gleiche Akkumulatorenbatterie von einer Längsseite.

Figur 7 zeigt die gleiche Akkumulatorenbatterie von einer Stirnseite.

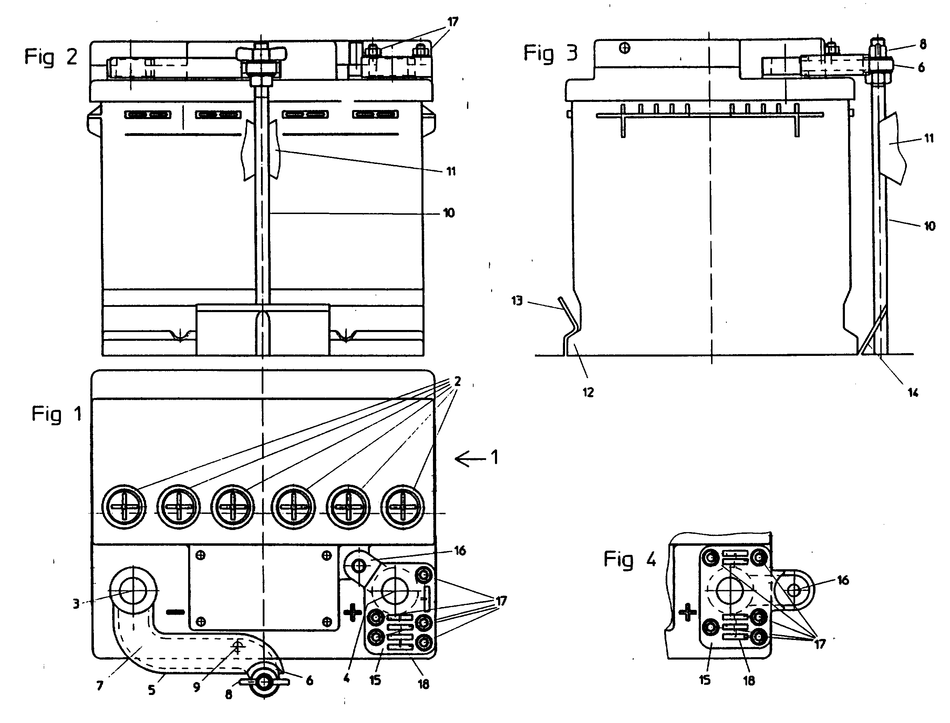

Gemäß Figur 1 besitzt die ausweislich ihrer sechs Verschlußstopfen 2 sechszellige Akkumulatorenbatterie 1 einen negativen Endpol 3 und einen positiven Endpol 4, wobei erfindungsgemäß eine Schiene 5 mit dem negativen Pol z.B. durch Schweißen fest verbunden ist und an ihrem Ende eine über den Batterieumriß hinausragende Befestigungsöse 6 aufweist In ihrer doppelten Eigenschaft als Befestigungselement und als Anschlußteil ist die Schiene elektrisch leitend und kann entweder ganz in Metall ausgeführt sein oder als Kunststoffschiene eine metallische Leiterbahn 7, z.B. ein flaches Kupferband, enthalten.

Mittels der Öse wird eine direkte Verbindung des Batterie-Endpols am Fahrzeugchassis hergestellt, wobei die Befestigung an einer Halterung am Chassis oder im Motorraum ohne Zuhilfenahme von Werkzeugen, vielmehr durch eine handliche Schraube oder Flügelmutter 8 vorgenommen werden kann.

Um mögliche Verspannkräfte aufzumehmen, kann die Schiene zusätzlich an einem Befestigungspunkt 9 auf dem Batteriedeckel fixiert sein. Diese Fixierung kann mittels eines an der Schienenunterseite vorhandenen Zapfens, der in ein Sackloch in der Deckelwand eingreift, geschehen, ebenso durch den Eingriff einer schwalbenschwanzförmigen Ausformung der Schiene in eine korrespondierende Nut.

Aus Figur 2 ist die beispielhafte Befestigung eines Stehbolzens 10 an der Öse ersichtllich, der seinerseits entweder mit einem Batterieträger (nicht dargestellt) oder einer Halterung 11 am Chassis fest verbunden ist.

Die Ansicht dieses Batterieanschlusses gemäß Figur 3 von einer Stirnseite des Blockkastens her läßt eine dem Kasten angeformte Bodenleiste 12 mit einer festen Gegenleiste 13 des Batterieträgers sowie ein Leitblech 14 erkennen. Über letzteres rutscht die Akkumulatorenbatterie beim Installieren hinein in ihre exakte Endposition.

Ein weiterer Gegenstand der Erfindung ist die feste Verbindung des positiven Endpols 4 mit einer Anschlußplatte 15 (Figur 1), welche die Basis bildet für den Anschluß des Starterkabels sowie für eine Mehrzahl weiterer Anschlüsse (Nebenanschlüsse) für die elektrische Versorgung von Stromverbrauchem (unter anderem Beleuchtung) im Fahrzeug.

In einer vorzugsweisen Ausführung ist die Anschlußplatte eine Kunststoffplatte, aus welcher eine metallische Lasche 16 zum Anschließen des Starterkabels seitlich herausragt und auf welcher entsprechend der Zahl der Nebenanschlüsse Anschlußschrauben 17 verteilt sind, welche durch im Kunststoff inkorporierte Leiterbahnen (nicht dargestellt) Kontakt zum Pol 4 besitzen.

In besonders vorteilhafter Weise ist erfindungsgemäß mit der Anschlußplatte eine elektrische Absicherung aller Nebenanschlüsse durch Ausstattung mit Sicherungen verbunden, die sich ebenfalls auf der Anschlußplatte 15, mithin in unmittelbarer Polnähe bzw. an der Batterie befinden, so daß im Fahrzeug keine ungesicherten elektrischen Leitungen (mit Ausnahme des Starterkabels) mehr vorhanden sind, von denen bei Kurzschlüssen eine Brandgefahr ausgeht. Dabei ist die Leiterbahn jedes einzelnen Nebenanschlusses 17 von einer Klemmhalterung unterbrochen und in diese jeweils eine Einzelsicherung 18 eingesetzt.

Einzelabsicherungen sind auch möglich, wenn die Anschlußplatte aus verschiedenen Materialien so geformt ist, daß sich die einzelnen Kontaktierungen der Nebenanschlüsse zum Pol durch Bereiche aus leiffähigen Material ergeben.

Bei hinreichendem Platz im Umfeld der Batterie kann die Anschlußplatte auch wie im Beispiel der Figur 4 so gestaltet und angeordnet sein, daß die Lasche 16 für den Starterkabelanschluß über den Batterieumriß hinaussteht, was ihre Zugänglichkeit erhöht.

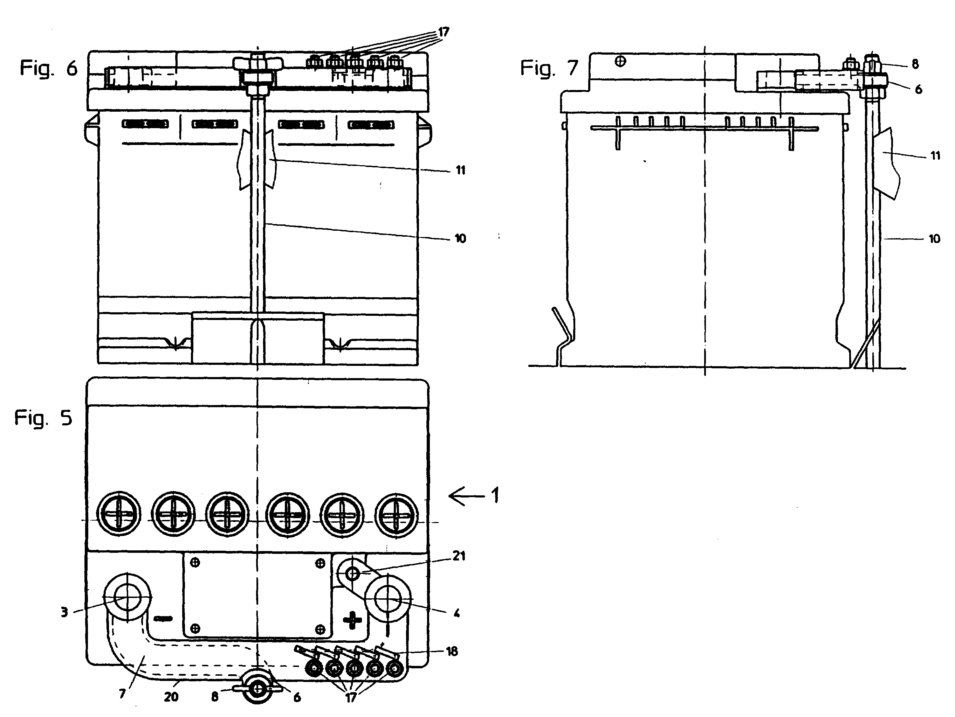

Bei der in Figur 5 dargestellten Akkumulatorenbatterie sind beide Batterie-Endpole über eine gemeinsame Schiene 20 fest verbunden. Da diese jedoch keine Kurzschlußbrücke bilden darf, besteht diese Befestigungsschiene aus Kunststoff, welcher die notwendigen Kontaktierungen in Form von Kontaktierungseinlagen (wie z.B. die Leiterbahn 7 aus einem Kupferband) enthält und andererseits den positiven Endpol mitsamt seinen Nebenanschlüssen vom negativen Endpol elektrisch isoliert.

Bei dieser Ausführung des Batterieanschlusses kann der dem positiven Pol zugeordnete Arm der Schiene zugleich die Funktion der Anschlußplatte 15 ausüben, indem er die Mehrfachanschlüsse mit ihren Anschlußschrauben 17 und femer deren Einzelsicherungen 18 trägt.

Die Kontaktierungen der Nebenanschlüsse mit dem positiven Endpol bestehen aus im Kunststoff inkorporierten individuellen Leiterbahnen, wie weiter oben für die Anschlußplatte bereits beschrieben. Eine Lasche zum Anbringen des Starterkabels wird hier von einer unmittelbar am Polkopf befestigten Metallzunge 21 gebildet. Die Seitenansichten der Batterie gemäß den Figuren 6 und 7 entsprechen den in Figur 2 und 3 wiedergegebenen Ansichten.

Eine wesentlicher Vorteil des neuen Batterieanschlusses besteht darin, daß die Batterie direkt am massiven Bleipol gehaltert ist und bei Verklammerung des Blockkastens an einer diagonal dem Pol gegenüberliegenden Bodenleiste (vergleiche Figur 3) die Befestigung durch den Batterieschwerpunkt hindurchgeht. Das Gehäuse selbst ist hierdurch keinerlei Spannungen ausgesetzt.

Weiterhin können wegen der nach oben freiliegenden Schraubbefestigungen alle Montageschritte von einem Roboter ausgeführt werden.

## Patentansprüche

1. Akkumulatorenbatterie, insbesondere Starterbatterie für Kraftfahrzeuge, mit einem Batteriegehäuse, durch das hindurch die Pole der Batterie nach außen geführt sind, und bei der an einem Pol eine Schiene befestigt ist, deren Ende mit einer über den Batterieumriß hinausstehenden Befestigungsöse versehen ist, dadurch gekennzeichnet, daß die Schiene mit beiden Polen (3,4) fest verbunden ist und daß die Schiene aus einem Kunststoff mit Kontaktierungseinlagen besteht

2. Akkumulatorenbatterie nach Anspruch 1, dadurch gekennzeichnet, daß als Kontaktierungseinlage ein Kupfer-Flachbandkabel (7) vorgesehen ist.

3. Akkumulatorenbatterie nach Anspruch 1, dadurch gekennzeichnet, daß die Kontaktierungseinlagen auf der Seite des positiven Endpols gegen die Befestigungsöse isoliert sind.

4. Akkumulatorenbatterie nach einem der Ansprüche 1 - 3, dadurch gekennzeichnet, daß die Schiene im Bereich des positiven Endpols neben einer Lasche (16) für den Starterkabel-Anschluß weitere Anschlüsse (17) für elektrische Verbraucher im Fahrzeug aufweist.

5. Akkumulatorenbatterie nach einem der Ansprüche 1 - 4, dadurch gekennzeichnet, daß die weiteren Anschlüsse über Sicherungen (18) elektrisch abgesichert sind.

6. Akkumulatorenbatterie nach einem der Ansprüche 1 - 5, dadurch gekennzeichnet, daß die den Endpolen diagonal gegenüberliegende Batterieseite durch eine Bodenleiste (12) gehaltert ist.

## Claims

1. Rechargeable battery, in particular a starter battery for motor vehicles, having a battery housing through which the poles of the battery are passed to the outside, and in which one pole has attached to it a rail whose end is provided with an attachment eye which projects beyond the battery outline, characterized in that the rail is firmly connected to both poles (3, 4) and that the rail is composed of a plastic with contact-making inserts.

2. Rechargeable battery according to Claim 1, characterized in that a copper ribbon cable (7) is provided as the contact-making insert.

3. Rechargeable battery according to Claim 1, characterized in that the contact-making inserts are insulated from the attachment eye on the side of the positive end pole.

4. Rechargeable battery according to one of Claims 1-3, characterized in that, in the region of the positive end pole and adjacent to a lug (16) for the starter cable connection, the rail has further connections (17) for electrical loads in the vehicle.

5. Rechargeable battery according to one of Claims 1-4, characterized in that the further connections are electrically protected via fuses (18).

6. Rechargeable battery according to one of Claims 1-5, characterized in that the battery side which is diagonally opposite the end poles is held by a bottom strip (12).

## Revendications

1. Batterie d'accumulateurs, en particulier batterie pour démarreur destinée à des véhicules automobiles, équipée d'un boîtier de batterie, à travers lequel les pôles de la batterie sont guidés vers l'extérieur, et pour laquelle à un pôle est fixée une barre, dont l'extrémité est dotée d'un oeillet de fixation sortant du contour de la batterie, caractérisée en ce que
• la barre est reliée rigidement à deux pôles (3,4), et
• la barre est constituée d'une matière synthétique comportant des organes rapportés de mise en contact.

2. Batterie d'accumulateurs selon la revendication 1,
caractérisée en ce qu'
un câble à ruban en cuivre (7) est prévu comme organe rapporté de mise en contact.

3. Batterie d'accumulateurs selon la revendication 1,
caractérisée en ce que les organes rapportés de mise en contact sont isolés, du coté du pôle final positif, vis-à-vis de l'oeillet de fixation.

4. Batterie d'accumulateurs selon l'une des revendications 1 à 3,
caractérisée en ce que
la barre présente dans la zone du pôle d'extrémité positif, outre une patte (16) destinée au raccordement par câble au démarreur, d'autres raccordements (17) destinés à des consommateurs électriques montés dans le véhicule.

5. Batterie d'accumulateurs selon l'une des revendications 1 à 4
caractérisée en ce que
les autres raccordements sont assurés électriquement par l'intermédiaire de sécurités ou fusibles (18).

6. Batterie d'accumulateurs selon l'une des revendications 1 à 5,
caractérisée en ce que
le coté de batterie diagonalement opposé aux pôles d'extrémité est maintenu au moyen d'une bande de fond (12).
